(19) Europäisches Patentamt / European Patent Office / Office européen des brevets

(11) **EP 3 427 378 B1**

(12) **EUROPÄISCHE PATENTSCHRIFT**

(45) Veröffentlichungstag und Bekanntmachung des Hinweises auf die Patenterteilung:
**13.09.2023 Patentblatt 2023/37**

(21) Anmeldenummer: **16709780.7**

(22) Anmeldetag: **11.03.2016**

(51) Internationale Patentklassifikation (IPC):
*H02P 8/24* (2006.01)   *F16K 31/04* (2006.01)
*F16K 31/06* (2006.01)   *H02J 7/34* (2006.01)

(52) Gemeinsame Patentklassifikation (CPC):
**H02P 8/24; F16K 31/047**

(86) Internationale Anmeldenummer:
**PCT/EP2016/055364**

(87) Internationale Veröffentlichungsnummer:
**WO 2017/153001 (14.09.2017 Gazette 2017/37)**

(54) **VENTILSTELLANTRIEB UND VERFAHREN DAMIT**

VALVE ACTUATOR AND METHOD THEREWITH

ACTIONNEUR DE SOUPAPE ET PROCÉDÉ L'UTILISANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**16.01.2019 Patentblatt 2019/03**

(73) Patentinhaber: **Karl Dungs GmbH & Co.KG**
**73660 Urbach (DE)**

(72) Erfinder:
• **OBERMÖLLER, Nils**
**73614 Schorndorf (DE)**
• **MARX, Dominic**
**73655 Plüderhausen (DE)**
• **BÖS, Benjamin**
**73614 Schorndorf (DE)**

(74) Vertreter: **Rüger Abel Patentanwälte PartGmbB**
**Webergasse 3**
**73728 Esslingen a. N. (DE)**

(56) Entgegenhaltungen:
EP-A1- 2 573 640   DE-A1-102011 103 135
US-A- 6 040 676   US-A- 6 100 655

**Beschreibung**

Die Erfindung betrifft einen Ventilstellantrieb für Ventile, Hähne, Schieber oder Klappen mit Selbstschlussfunktion und ein Verfahren zum Betrieb eines Ventilstellantriebs.

Zur Betätigung von Fluidventilen, Schiebern, Klappen und dergleichen sind z.B. aus der DE 102 48 616 A1 Elektroantriebe bekannt, bei denen die Stellbewegung des Ventilverschlussglieds durch einen Elektromotor erzeugt wird. Dort ist eine Schließfeder vorgesehen, die das Ventil bei Stromausfall schließt. Die Schließkraft der Schließfeder ist so bemessen, dass sie die durch Reibung und sonstige Einflüsse in Motor und Getriebe erzeugten Verzögerungsmomente überwindet und das Ventilverschlussglied bei stromlosem Motor in Schließstellung überführt. Bei Gasanwendungen soll dieser Vorgang üblicherweise in einer begrenzten Zeit, zum Beispiel etwa 1 Sekunde abgeschlossen sein. Andererseits müssen Überlastungen des Ventilsitzes und des Ventilverschlussglieds bei dem Schließvorgang sicher ausgeschlossen werden können, weil diese Überlastungen zur Beschädigung des Ventils und damit zur Funktionsunfähigkeit führen können. Deswegen muss die kinetische Energie, die beim Auftreffen des Ventilverschlussglieds auf den Ventilsitz einwirkt, beschränkt werden.

Dazu ist aus der EP 2 228 573 B1 ein elektromotorischer Ventilantrieb bekannt, bei dem das Getriebe eine Kette enthält, über die das Ventilverschlussglied gegen die Kraft einer Schließfeder in Offenstellung gezogen wird. Die Kette vermittelt Zugkräfte, nicht aber Schubkräfte auf das Ventilverschlussglied und trennt somit beim dynamischen Schließvorgang die auslaufende Motor-Getriebe-Einheit von dem auf dem Ventilsitz auftreffenden Verschlussglied. Die Funktionsfähigkeit dieses Prinzips ist jedenfalls dann gegeben, wenn der Motor des Antriebs nicht allzu lange nachläuft. Dies bedeutet, dass die Kraft der Schließfeder und die Länge der Kette aufeinander abgestimmt sein müssen. Sollen gleiche Ventilantriebe an verschiedenen Ventilen mit unterschiedlichen Schließkräften Anwendung finden, stößt dieses Prinzip an Grenzen. Ein zu weiter Nachlauf ergibt stets ein Spiel, welches zur nächsten Bereitschaft zum Öffnen kompensiert werden muss. Sofern Anforderungen an die Bereitschaftszeit bestehen, ist die alleinige Verwendung eines Überlaufs daher nicht zweckmäßig.

Weiter ist zum Bremsen von permanent erregten bürstenlosen Gelichstrommotoren aus der DE 35 31 262 A1 eine einfache Kurzschlussschaltung bekannt. Der bürstenlose Gleichstrommotor ist über ein Umschaltrelais entweder mit einer Gleichspannungsquelle oder mit einem Kurzschlusszweig verbunden. Wird die Dämpfungsschaltung aktiviert, wird der im Generatorbetrieb nachlaufende bürstenlose Gleichstrommotor kurzgeschlossen, so dass seine kinetische Energie in dem technisch zwangsläufig vorhandenen ohmschen Widerstand des Motors und des Kurzschlusskreises in Wärme umgesetzt wird. Der Motor stoppt abrupt.

Aus der DE 10 2011 103 135 A1 ist ein Ventilantrieb mit einem Elektromotor bekannt, dessen Rotor mit einer Gewindespindel in Eingriff steht. Die Stirnseite der Gewindespindel drückt auf den Schaft eines Ventiltellers, um diesen gegen die Kraft einer Ventilschließfeder von einem Ventilsitz weg zu drücken. Zur Speisung des Elektromotors ist eine Steuerschaltung vorgesehen, die den Elektromotor, um ihn anzutreiben, mit einer Stromquelle verbindet. Der Elektromotor hält das Ventil offen solange er bestromt wird. Um das Ventil zu schließen, trennt die Steuerschaltung den Elektromotor von der Stromquelle. Die Ventilschließfeder kann nunmehr das Ventil schließen, wobei sie die Gewindespindel zurückschiebt und dadurch den Motor rückwärts dreht. Von dem Motor erzeugte Spannung wird genutzt, um einen Kondensator aufzuladen, ie infolge des Schwungs des drehenden Rotors kann dieser noch etwas weiter drehen, nachdem das Ventilverschlussglied auf dem Ventilsitz aufgesetzt hat. Dadurch hebt die Stirnfläche der Gewindespindel von dem Schaft des Ventilverschlussglieds ab. Die Steuerschaltung kann nun die auf dem Kondensator gespeicherte Energie nutzen, um den Motor kontrolliert wieder vorwärts drehen zu lassen bis die Gewindespindel die Stirnseite des Ventilschafts wieder berührt. Der Motor findet so seinen "Nullpunkt", der für ein kontrolliertes Steuern des Ventils benötigt wird.

Weiter offenbart die US 6,100,655 ein Ventil mit einem Motor, der das Ventil gegen die Kraft einer Schließfeder öffnet. Dem Motor wird ein Rastmoment zugeschrieben, das so groß ist, dass es von der Schließfeder nicht ohne weiteres überwunden werden kann. Deswegen ist ein Speicherkondensator vorgesehen, der aufgeladen wird, solange an dem Motor Netzspannung anliegt. Wird diese abgeschaltet, wird der Kondensator umgepolt und mit dem Motor verbunden, um dabei zu helfen, sein Rastmoment zu überwinden.

Außerdem ist es aus der US 6,040,676 bekannt, einen Schrittmotor mit einer passiven elektronischen Dämpfungseinrichtung zu verbinden, um ein Überschwingen des Rotors bei Schrittbetrieb und somit die Entstehung von Schrittfehlern zu vermeiden.

Es ist Aufgabe der Erfindung, einen Ventilantrieb zu schaffen, der an Ventilen oder Klappen verschiedener Größe einsetzbar ist und sicheren Selbstschluss gestattet.

Diese Aufgabe wird mit dem Ventilantrieb nach Anspruch 1 gelöst:

Der erfindungsgemäße Ventilantrieb umfasst einen permanenterregten Schrittmotor mit typischerweise zwei oder mehreren Wicklungen, die jeweils eine bestimmte Induktivität und einen bestimmten ohmschen Widerstand aufweisen. Zu dem Ventilantrieb gehört weiter ein Getriebe, über das der Schrittmotor antriebsmäßig mit dem Ventilverschlussglied verbindbar ist, um dieses in einer Öffnungsrichtung von einem Ventilsitz weg und in Schließrichtung auf den Ventilsitz hin zu bewegen. Zur Realisierung einer automatischen Selbstschlussfunktion ist ein Federmittel vorgesehen. Dieses ist mit dem Getriebe direkt oder indirekt verbunden, um das angeschlossene Ventilverschlussglied in Schließrichtung vorzuspannen und bei Stromausfall in Schließrichtung zu bewegen.

Die Wicklung des Motors ist mit einer Speiseschaltung verbunden, die den Motor unter Überwindung der Kraft der Schließfeder in Öffnungsrichtung kontrolliert bewegen und in vorgegebenen Positionen halten kann. Außerdem ist eine Dämpfungsschaltung vorgesehen, die einen kapazitiven Dämpfungsstromkreis aufweist. Dieser ist dazu eingerichtet, den im Generatorbetreib (bei der Schließbewegung) laufenden Motor geschwindigkeitsabhängig zu verzögern. Um zwischen Antrieb und Dämpfen umschalten zu können, ist eine Umschalteinrichtung vorgesehen. Diese verbindet entweder die Speiseschaltung oder die Dämpfungsschaltung mit der Wicklung. Die Umschaltung erfolgt vorzugsweise in einem Moment, in der sie nicht stromführend ist. Die Umschaltung im stromlosen Zustand kann von der Steuereinrichtung bewirkt werden, die den Motorstrom kontrolliert bzw. reguliert.

Der kapazitive Dämpfungsstromkreis bildet mit der Induktivität der Wicklung des Schrittmotors während des Dämpfungsbetriebs eine Resonanzanordnung, die durch den sich drehenden im Generatorbetrieb laufenden Rotor erregt wird. Der dadurch hervorgerufene Strom wirkt auf die Drehung des Rotors dämpfend. Die Dämpfungswirkung ist in nichtlinearer Weise von der Rotordrehzahl abhängig und nimmt bei steigender Drehzahl überproportional zu. Damit stellt die Dämpfungsschaltung eigenständig ohne externen Regeleingriff sicher, dass die Motordrehzahl während des Schließvorgangs nur in sehr geringem Maße von der Kraft der Schließfeder abhängig ist, so dass einerseits keine zu große Drehzahl und somit nicht zu viel kinetische Energie in Motor und Getriebe vorhanden sind und andererseits sicher ein zügiges Schließen erreicht werden kann.

Vorzugsweise ist jede der Wicklungen des Schrittmotors in der genannten Weise über eine Umschalteinrichtung mit einer Speiseschaltung und zum Dämpfen mit einer Dämpfungsschaltung mit kapazitivem Dämpfungsstromkreis verbunden. Vorzugsweise werden somit alle Wicklungen des Schrittmotors zum Dämpfen herangezogen. Die gewünschte Dämpfung ist mit der Anzahl der belasteten Phasen einstellbar.

Die Umschalteinrichtungen werden vorzugsweise synchron betrieben, d.h. entweder sind alle Wicklungen mit ihren Speiseschaltungen verbunden oder es sind alle Wicklungen mit ihren Dämpfungsschaltungen verbunden. Die Umschalteinrichtungen sind vorzugsweise solche mit mechanischem Kontakt wie beispielsweise Umschaltrelais. Vorzugsweise führt der Ruhekontakt des betreffenden Umschaltrelais zum Dämpfungsstromkreis, während der Arbeitskontakt zur Speiseschaltung führt. Sobald das Umschaltrelais stromlos wird, d.h. abfällt, wird die Dämpfungsschaltung aktiviert. Damit ist die Dämpfungsschaltung bei Stromausfall sicher aktiv.

Erfindungsgemäß enthält der kapazitive Dämpfungsstromkreis einen Kondensator, der über die Umschalteinrichtung mit der Wicklung des Schrittmotors eine Masche bildet, die ein Resonanzkreis ist. Der ohmsche Widerstand der Wicklung und Eisenverluste des Eisenkreises des Schrittmotors stellen eine Bedämpfung dieses Resonanzkreises dar und bestimmen den Gütefaktor desselben. Der Gütefaktor ist vorzugsweise so bemessen, dass er mindestens größer als Fünf, vorzugsweise größer als Zehn und weiter vorzugsweise größer als Zwanzig ist. Damit wird eine relativ steile Resonanzkurve der Resonanzanordnung erreicht, was wiederum eine stark nichtlineare Verzögerungsmoment-Drehzahl-Kennlinie des Motors zur Folge hat. Eine solche stark nichtlineare Kennlinie führt zu einer gut definierten Motordrehzahl während des Dämpfungsvorgangs.

Die Dämpfungseinrichtung und das Federmittel sind vorzugsweise derart bemessen und aufeinander abgestimmt, dass die Motordrehzahl beim Schließen das Fünf- bis Fünfzehnfache vorzugsweise das Zehnfache der Drehzahl beim Öffnen des Ventils ist. Die Auslegung der Dämpfungseinrichtung kann anhand der nach dem Schließen des Ventils im System verbleibenden Energie erfolgen, die von der Schnellschlussgeschwindigkeit abhängig ist. Diese Energie treibt den Motor und das Getriebe in der Auslaufphase nach dem Aufsetzen des Ventilverschlussglieds auf den Ventilsitz an. Soll der Auslauf begrenzt sein, um die Bereitschaftszeit zum nächsten Öffnen zu minimieren, kann ein Endanschlag für den ventilseitigen Getriebeabtrieb vorgesehen werden. Der Anprall des Getriebeabtriebs an den Endanschlag weist einen Impuls auf, dessen Höhe vorzugsweise so bemessen ist, dass das Getriebe keine Belastung erfährt, wie sie nicht auch im Normalbetrieb auftritt. Andererseits ist die Schließgeschwindigkeit und damit die Motordrehzahl mindestens so hoch, dass angesichts des Schließwegs in jedem Fall die maximale Schließzeit unterschritten wird.

Die Abstimmung bezieht sich dabei im Wesentlichen auf die Einstellung der Dämpfungseinrichtung. Die Wahl des Federmittels und die Bemessung von dessen Federkraft sind relativ unkritisch. Der Ventilantrieb kann deswegen ohne weiteres für verschiedene Schließfedern eingesetzt werden, ohne dass er einer Anpassung oder Veränderung bedürfte. Die Schließdrehzahl wird vorzugsweise durch die Bemessung der Größe des Kondensators in dem kapazitiven Dämpfungsstromkreis eingestellt.

Um die trotz gedämpft laufendem Motor in Motor und Getriebe vorhandene kinetische Energie beim Aufsetzen des Ventilverschlussglieds auf den Ventilsitz von dem Ventilverschlussglied und dem Ventilsitz fernzuhalten, kann zwischen dem Getriebe und dem Ventilverschlussglied eine Getriebelose vorgesehen sein. Diese wird vorzugsweise durch ein biegeschlaffes Zugmittel, beispielsweise eine Kette gebildet. Die Dämpfungsschaltung bewirkt einen lediglich kurzen Auslauf von Motor und Getriebe, der sich auf den Bruchteil einer vollen Umdrehung eines Kettenrads für die Kette begrenzen lässt. Auf diese Weise kann mit kurzen Ketten und kurzen Auslaufzonen gearbeitet werden, wodurch sich die Größe des Ventilantriebs auf ein Minimum reduzieren lässt.

Erfindungsgemäß ist außerdem ein Verfahren zum Betrieb eines Ventilantriebs vorgesehen. Die Besonderheit des Verfahrens liegt insbesondere im Dämpfen des Schrittmotors des Ventilantriebs durch eine Dämpfungsschaltung mit Resonanzcharakteristik. Die Resonanzanordnung aus Motorwicklung und kapazitiven Dämpfungsstromkreis arbeitet während des Dämpfens im unterresonanten Betrieb, d.h. die Frequenz des erzeugten Stroms liegt unterhalb der Resonanzfrequenz der Resonanzanordnung. Es wird auf diese Weise eine stark nichtlineare Verzögerungsmoment-Drehzahl-Kennlinie erreicht, bei der das Verzögerungsmoment bei ansteigender Drehzahl sehr stark überproportional ansteigt.

Einzelheiten von Ausführungsformen der Erfindung sind Gegenstand der Zeichnung, der Beschreibung oder von Unteransprüchen. Es zeigen:

Figur 1 einen Ventilantrieb mit angeschlossenem Ventil, in sehr stark schematisierter Übersichtsdarstellung,

Figur 2 den Ventilantrieb, in schematisiertem und vereinfachtem Schaltbild,

Figur 3 eine Federkennlinie der Schließfeder des Ventils nach Figur 1,

Figur 4 ein Diagramm zur Veranschaulichung der Resonanzcharakteristik der Dämpfungsschaltung und

Figur 5 das von der Resonanzschaltung erzeugte Verzögerungsmoment als Diagramm.

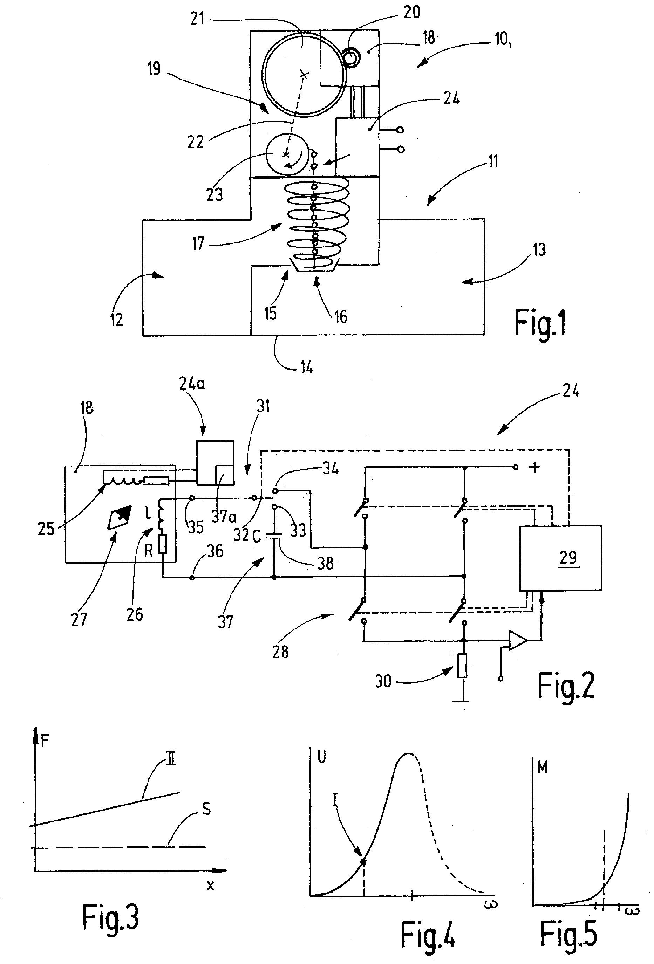

In Figur 1 ist ein Ventilantrieb 10 veranschaulicht, der zur Betätigung eines Ventils 11 vorgesehen ist, mit dem ein in seinen Eingang 12 eintretender und an seinem Ausgang 13 austretender Gasstrom freigebbar, absperrbar oder auch regulierbar ist. Dazu ist in dem Ventilgehäuse 14 ein Ventilsitz 15 angeordnet, dem ein Ventilverschlussglied 16 zugeordnet ist. Das Ventilverschlussglied ist beweglich angeordnet, um bedarfsweise den Ventilsitz 15 verschließen oder freigeben zu können. Im Ausführungsbeispiel nach Figur 1 wird das Ventilverschlussglied parallel zur Öffnungsachse des Ventilsitzes 15 bewegt - es handelt sich um ein Sitzventil. Der Ventilantrieb 10 ist jedoch gleichermaßen bei anderen Ventiltypen einsetzbar, die als Schieber, Klappen oder dergleichen bezeichnet werden und bei denen das Schließglied zum Beispiel im rechten Winkel zu einer Öffnungsachse einer Öffnung bewegt wird.

Dem Ventilverschlussglied 16 ist eine Schließfeder 17 zugeordnet, die das Ventilverschlussglied 16 in Schließrichtung, d.h. auf den Ventilsitz 15 hin vorspannt.

Zu dem Ventilantrieb 10 gehört ein permanenterregter Schrittmotor 18, der über ein Getriebe 19 mit dem Ventilverschlussglied 16 verbunden ist. Das Getriebe 19 ist ein Untersetzungsgetriebe, das zumindest ein mit einem Motorritzel 20 kämmendes Zahnrad 21 aufweist. Es können weitere miteinander in Eingriff stehende Zahnräder verbunden sein, die einen Kraftübertragungsweg bilden. Dieser ist in Figur 1 rein schematisch durch eine gestrichelte Linie angedeutet. Der Kraftübertragungsweg kann drehende Getriebeelemente und insbesondere auch linear bewegliche Getriebeelemente umfassen, wie beispielsweise Zahnstangen, Gewindespindeln oder, wie in Figur 1 beispielhaft veranschaulicht, ein biegeschlaffes Zugmittel, wie beispielsweise eine Kette 22. Diese steht am einen Ende mit einem Kettenrad 23 und an ihrem anderen Ende mit dem Ventilverschlussglied 16 in Verbindung. Anstelle einer Kette können jedoch auch andere Elemente wie beispielsweise flexible Drähte, Seile, Bänder oder dergleichen zur Anwendung kommen.

Die Kette 22 bildet eine zugfeste, nicht aber eine schubfeste Verbindung und erlaubt in Schubrichtung eine Bewegung des Kettenrads 23 ohne Bewegung des Ventilverschlussglieds 16. Sie bildet somit eine Getriebelose. Anstelle eines biegeschlaffen Zugmittels kann die Getriebelose auch durch eine spielbehaftete Verbindung zweier Getriebeglieder, wie beispielsweise einen in einem Langloch sitzenden Mitnehmer gebildet sein.

Der Schrittmotor 18 ist an eine Betriebsschaltung 24 angeschlossen, die in Figur 2 auszugsweise veranschaulicht ist. Wie ersichtlich, weist der Schrittmotor 18 typischerweise mehrere, zum Beispiel zwei Wicklungen 25, 26 auf, die dazu dienen, ein Drehfeld zur Drehung des permanenterregten Rotors 27 aufzubauen. Dazu ist für jede Wicklung 25, 26 eine Speiseschaltung 28 vorgesehen, die in Figur 2 lediglich exemplarisch und stellvertretend für alle Speiseschaltungen für die Wicklung 26 dargestellt ist. Die Speiseschaltung 28 dient zur Bereitstellung eines kontrollierten, veränderlichen Stroms für die Wicklung 26, um diese in phasenrichtiger Relation zu den übrigen Wicklungen 25 zu erregen und ein Feld aufzubauen, das die Bewegung oder auch die Position des Rotors 27 bestimmt. Dazu umfasst die Speiseschaltung 28 zum Beispiel eine Schalterbrücke 29 mit vier elektronisch gesteuerten Schaltern, zum Beispiel MOSFET-Transistoren, IGBTs oder dergleichen, die von einer Steuerschaltung 29 kontrolliert betrieben werden. Diese Steuerschaltung kann auch über eine Stromsensoranordnung 30 den in der Wicklung 26 fließenden Strom erfassen und regulieren. Die Steuerschaltung 29 kann die nicht weiter veranschaulichten Wechselrichterbrücken für die andere Wicklung ebenso steuern und deren Strom kontrollieren bzw. regulieren.

Der von der Wechselrichterbrücke gelieferte Strom wird dem Schrittmotor 18 über eine z.B. von der Steuereinrichtung 29 gesteuerte Umschalteinrichtung 31 zugeführt. Diese wird beispielsweise durch ein Umschaltrelais gebildet, dessen Zunge 32 im stromlosen (entregten) Zustand des Relais mit einem Ruhekontakt 33 - und im bestromten (erregten) Zustand mit einem Arbeitskontakt 34 verbunden ist. Das Umschalten der Umschalteinrichtung erfolgt vorzugsweise im stromlosen Zustand. Z.B. überwacht die Steuereinrichtung 29 mittels des Widerstands 30 den Motorstrom und schaltet die Umschalteinrichtung 31 erst um, wenn der durch sie hindurchfließende Strom einen Grenzwert unterschritten hat. Dies kann bei ausreichender Entregung des Motors 18 der Fall sein. Außerdem kann vorgesehen sein, dass die Steuereinrichtung 29 die Umschalteinrichtung 31 trotz vorhandenen Stroms dennoch umschaltet, wenn ansonsten die maximale Schließzeit überschritten würde.

Die Wicklung 26 ist mit einem Ende 35 mit der Kontaktzunge und über diese mit der Wechselrichterbrücke verbunden. Mit ihrem anderen Ende 36 ist die Wicklung 26 direkt mit der Wechselrichterbrücke verbunden. Das Ende 36 ist außerdem mit einem kapazitiven Dämpfungsstromkreis 37 verbunden, dessen anderes Ende an dem Ruhekontakt 33 anliegt. Der kapazitive Dämpfungsstromkreis 37 enthält zumindest einen Kondensator 38 sowie gegebenenfalls weitere Bauelemente, wie zum Beispiel parallel oder in Reihe geschaltete Kondensatoren, Widerstände oder induktive Elemente sowie gegebenenfalls auch nichtlineare Bauelemente, wie z.B. Dioden oder Z-Dioden.

Der kapazitive Dämpfungsstromkreis 37 ist bei entregtem Umschaltrelais (Umschalteinrichtung 31) zu der Wicklung 26 parallel geschaltet, so dass eine aus der Induktivität L der Wicklung 26, der Kapazität des Kondensators 38 und dem Innenwiderstand R der Wicklung 26 gebildete Resonanzanordnung LCR gebildet ist. Der gegebenenfalls frequenzabhängige Innenwiderstand R kann außerdem zusätzlich die Eisenverluste des Motors und sonstige Verluste repräsentieren. Die Resonanzanordnung LCR weist vorzugsweise eine hohe Güte Q von z.B. größer als 20 auf, da mit steigender Güte die Resonanzfrequenz schärfer definiert ist:

$$Q = \frac{1}{R}\sqrt{\frac{L}{C}}$$

Der Widerstand R liegt vorzugsweise im Bereich von einigen Ohm, zum Beispiel 4 bis 8 Ω, die Induktivität L liegt vorzugsweise im Bereiche weniger mH, zum Beispiel 10 bis 20 mH, die Kapazität C liegt vorzugsweise im Bereich weniger hundert nF, beispielsweise 330 nF.

Der insoweit beschriebene Ventilantrieb 10 arbeitet an dem Ventil 11 wie folgt:
Es wird zunächst davon ausgegangen, dass das Ventil 11 geöffnet werden soll. Dazu wird die Steuerschaltung 29 veranlasst, die angeschlossenen Wechselrichter zu aktivieren, um die Wicklungen 25, 26 über die Umschalteinrichtung 31 mit Stromimpulsen zu versorgen, die den Rotor 27 in gewünschter Richtung drehen, bis nach einer vorgegebenen Anzahl von Schritten die gewünschte Position des Ventilverschlussglieds 16 erreicht ist. In diesem Zustand können die Wicklungen 25, 26 weiter so bestromt werden, sodass in dem Schrittmotor 18 ein nicht mehr drehendes Magnetfeld aufrechterhalten wird, um den Rotor 27 in vorgegebener Position zu halten.

Das kontrollierte Verstellen oder auch Schließen des Ventils 11 erfolgt normalerweise ebenfalls vermittels der Steuerschaltung unter kontrollierter Bestromung der Wicklungen 25, 26 durch entsprechende Aktivierung der Wechselrichterbrücken. Es entsteht ein rückwärts drehendes Magnetfeld, das den Rotor 27 nun rückwärts drehen und gegebenenfalls auch wieder in anderen Positionen zum Stillstand bringen kann. Die Schließfeder 17 hat bei diesen Aktionen immer die Funktion, die Kette 22 oder ein sonstiges Zugmittel, wie ein Seil, ein Band oder dergleichen, straff zu halten und in Richtung auf das Schließen des Ventils 11 vorzuspannen. Sie bewirkt jedoch das Schließen nicht. Davon zu unterscheiden ist der stromlose Zustand bei geschlossenem Ventil und der Schnellschluss, um das Ventil 11 bei stromlosem Antrieb 10 kontrolliert in Schließstellung zu überführen. Letzteres läuft wie folgt ab:

In stromlosem Zustand genügt die der Steuerschaltung 29 zur Verfügung stehende Energie nicht mehr, um einen kontrollierten Motorbetrieb aufrecht zu erhalten. Ein Schnellschlussimpuls kann durch Abschalten der Versorgungsspannung des Ventilantriebs 10 ausgelöst werden. In diesem Fall fällt das Umschaltrelais ab, d.h. die Umschalteinrichtung 31 stellt eine Verbindung zwischen der Zunge 32 und dem Ruhekontakt 33 her. Dabei kann die Steuerschaltung 29 durchaus noch in Betrieb sein, so dass diese das Abschalten des Umschaltrelais veranlasst. Alternativ kann das Abfallen, d.h. Entregen des Umschaltventils auch schlicht durch den Wegfall der Betriebsspannung erfolgen. Vorzugsweise ist die Umschalteinrichtung 31 so gesteuert, dass ein Umschalten im stromlosen Zustand geschieht und somit die Kontakte der Umschalteinrichtung geschont werden. Es wird auf diese Weise jedenfalls der kapazitive Dämpfungsstromkreis 37 mit der Wicklung 26 verbunden. Gleichzeitig werden andere Dämpfungsstromkreise mit den anderen Wicklungen verbunden.

Die Schließfeder 17 drängt nun das Ventilverschlussglied 16 in Schließstellung und treibt dabei über das Getriebe 19 den Schrittmotor 18 an. Dieser läuft mit zunehmender Drehzahl und erzeugt dabei in den Wicklungen 25, 26 eine Spannung. In dem Resonanzkreis LCR entsteht dabei ein oszillierender Strom. Dieser Vorgang erstreckt sich über den gesamten Schließweg des Ventils 11. Die Kreisfrequenz ω dieser Oszillation liegt dabei vorzugsweise unterhalb der Resonanzfrequenz des Resonanzkreises LCR, dessen Resonanzkennlinie in Figur 4 veranschaulicht ist. Der Arbeitspunkt I liegt auf dem linken, niederfrequenten Ast der Resonanzkennlinie. Entsprechend entsteht ein verzögernd wirkender Strom, der gemäß Diagramm in Figur 5 ein Verzögerungsmoment M hervorruft.

Der Zusammenhang zwischen der Generatorspannung U und der (Kreis-)Frequenz ω ist gemäß Figur 4 an dem Arbeitspunkt I stark nichtlinear. Daraus ergibt sich eine noch stärker nichtlineare Verzögerungsmomentkurve gemäß Figur 5. Ersichtlicher Maßen nimmt das Verzögerungsmoment bei kleinen Änderungen der Drehzahl, die entsprechend kleine Änderungen der Kreisfrequenz ω der von dem Schrittmotor 18 erzeugen Generatorspannung zur Folge hat, überproportional zu oder ab. Dies wirkt im Hinblick auf verschieden auf das Ventilverschlussglied 16 einwirkende Kräfte sehr stark drehzahlstabilisierend.

Es kann auf diese Weise sichergestellt werden, dass der Schrittmotor 18 schnell genug läuft, um das Ventil 11 innerhalb einer Maximalzeit zu schließen und andererseits nicht zu schnell, um die im System vorhandene kinetische Energie zu beschränken. Dabei ist dieser Vorgang wenig abhängig von der in Figur 3 veranschaulichten Federkennlinie II. Diese kann steiler oder flacher verlaufen. Jedenfalls aber verläuft sie nicht durch den Nullpunkt, so dass auch dann, wenn das Ventilverschlussglied 16 auf dem Ventilsitz 15 aufsitzt, noch eine Schließkraft vorhanden ist.

Das Betriebsregime des Ventils 11 und seines Antriebs 10 kann auch auf einfaches Öffnen und Schließen beschränkt sein. Dazu kann der Motor 18 bei Bestromung des Antriebs 10 in Offenstellung gefahren und dort gehalten werden. Zum Abschalten, d.h. Schließen des Ventils, wird die Bestromung unterbrochen. Das Schließen des Ventils erfolgt dann, indem der Motor 18 angetrieben von der Schließfeder 17 im Generatorbetrieb unter Drehzahlkontrolle durch die Resonanzanordnung LCR in Schließstellung läuft.

Der erfindungsgemäße Ventilantrieb 10 weist eine Dämpfungsschaltung mit kapazitivem Dämpfungsstromkreis 37 auf, die bei Generatorbetrieb des Schrittmotors 18 aktiviert wird. Die Dämpfungsschaltung bildet mit der Motorwicklung 26 eine Resonanzanordnung LCR, die drehzahlstabilisierend und -regulierend wirkt. Die Drehzahl des im Generatorbetrieb laufenden Schrittmotors 18 wird in Grenzen konstant gehalten, und zwar ohne Regeleineingriff einer Steuerschaltung. Damit ist die Dämpfungsschaltung auch im stromlosen Zustand der Steuerung betriebsfähig und unabhängig von äußerer Stromversorgung sicher. Es wird sowohl ein schnelles Schließen erreicht wie ein zu langes Nachlaufen des Motors 18 sicher verhindert. Somit kann einerseits die maximale Schließzeit sicher unterschritten und andererseits der Nachlaufweg durch einen Anschlag begrenzt, und die Auftreffenergie an dem Anschlag zuverlässig auf ein zulässiges Maß begrenzt werden.

Bezugszeichen:

| | |
|---|---|
| 10 | Ventilantrieb |
| 11 | Ventil |
| 12 | Eingang |
| 13 | Ausgang |
| 14 | Ventilgehäuse |
| 15 | Ventilsitz |
| 16 | Ventilverschlussglied |
| 17 | Schließfeder |
| 18 | Schrittmotor |
| 19 | Getriebe |
| 20 | Motorritzel |
| 21 | Zahnrad |
| 22 | Kette |
| 23 | Kettenrad |
| 24, 24a | Betriebsschaltung |
| 25, 26 | Wicklungen |
| 27 | Rotor |
| 28 | Speiseschaltung |

(fortgesetzt)

| | |
|---|---|
| 29 | Steuerschaltung |
| 30 | Stromsensorschaltung |
| 31 | Umschalteinrichtung |
| 32 | Zunge |
| 33 | Ruhekontakt |
| 34 | Arbeitskontakt |
| 35, 36 | Wicklungsenden der Wicklung 26 |
| 37, 37a | Dämpfungsschaltung, kapazitiver Dämpfungsstromkreis |
| 38 | Kondensator |
| C | Kapazität |
| L | Induktivität der Wicklung 26 |
| R | Verlustwiderstand, Innenwiderstand der Wicklung 26 |
| LCR | Resonanzkreis |
| I | Arbeitspunkt |
| U | Generatorspannung an Wicklung 26 |
| ω | Kreisfrequenz |
| F | Kraft |
| x | Weg |
| M | Verzögerungsmoment |
| II | Federkennlinie |
| S | Summe der hemmend wirkenden Kräfte im Ventilantrieb 10 |

## Patentansprüche

1. Ventilantrieb (10), insbesondere für Ventile (11) oder Klappen mit Selbstschlussfunktion, wobei der Ventilantrieb aufweist:

   einen permanent erregten Schrittmotor (18), der wenigstens zwei Wicklungen (25, 26) aufweist, die eine Induktivität (L) und einen ohmschen Widerstand (R) haben,
   ein Getriebe (19), über das der Schrittmotor (18) antriebsmäßig mit einem Ventilverschlussglied (16) verbindbar ist, um dieses in einer Öffnungsrichtung von einem Ventilsitz (15) weg und in Schließrichtung auf einen Ventilsitz (15) hin zu bewegen,
   ein Federmittel (17), das mit dem Ventilverschlussglied (16) verbunden ist, um dieses in Schließrichtung vorzuspannen,
   eine Speiseschaltung (28), die mit einer der Wicklungen (25, 26) verbunden ist, um diese zum Antrieb des Schrittmotors (18) zu bestromen,
   mindestens eine Dämpfungsschaltung (37) mit kapazitivem Dämpfungsstromkreis (38) und
   mindestens eine Umschalteinrichtung (31), die mit einer der Wicklungen (25, 26) verbunden ist und über die die Wicklung (26) wahlweise mit der Speiseschaltung (28) oder der Dämpfungsschaltung (37) verbindbar ist, wobei die Dämpfungsschaltung (37) ein kapazitiver Dämpfungsstromkreis (37) ist, der einen Kondensator (38) mit einer Kapazität (C) enthält, wobei der kapazitive Dämpfungsstromkreis (37) zu der Wicklung (26) parallel geschaltet ist,
   so dass eine aus der Induktivität (L) der Wicklung (26), der Kapazität (C) des Kondensators (38) und dem Innenwiderstand (R) der Wicklung (26) gebildete Resonanzanordnung (LCR) gebildet ist, die eine Resonanzfrequenz aufweist, und
   dass die Resonanzanordnung dazu eingerichtet ist, während des Dämpfens im unterresonanten Betrieb zu arbeiten.

2. Ventilantrieb nach Anspruch 1, **dadurch gekennzeichnet, dass** eine weitere Dämpfungsschaltung (37a) mit kapazitivem Dämpfungsstromkreis und eine weitere Umschalteinrichtung vorgesehen sind, wobei die weitere Umschalteinrichtung mit der anderen der Wicklungen (25, 26) verbunden ist, um die andere Wicklung (25) wahlweise mit der Speiseschaltung (28a) oder der Dämpfungsschaltung (37a) zu verbinden.

3. Ventilantrieb nach Anspruch 2, **dadurch gekennzeichnet, dass** die Umschalteinrichtung (31) und die weitere Umschalteinrichtung synchron schaltend gesteuert sind.

4. Ventilantrieb nach einem der vorstehenden Ansprüche, **dadurch gekennzeichnet, dass** die Umschalteinrichtung (31) ein Umschaltrelais mit mechanischem Kontakt ist.

5. Ventilantrieb nach Anspruch 1, **dadurch gekennzeichnet, dass** der Resonanzkreis (LCR) einen Gütefaktor (Q) aufweist, der größer als Fünf, vorzugsweise größer als Zehn und weiter vorzugsweise größer als Zwanzig ist.

6. Ventilantrieb nach einem der vorstehenden Ansprüche, **dadurch gekennzeichnet, dass** das Federmittel (17) eine Federkennlinie aufweist, der entsprechend die von dem Federmittel (17) aufgebrachte Kraft (F) an jeder Stelle des Wegs (x) des Ventilverschlussglieds (16) größer ist, als die Summe aus hemmend wirkenden Kräften des Ventilantriebs (10).

7. Ventilantrieb nach einem der vorstehenden Ansprüche, **dadurch gekennzeichnet, dass** das Federmittel (17) eine Federkennlinie aufweist, der entsprechend die von dem Federmittel (17) aufgebrachte Kraft (F) an jeder Stelle des Wegs des Ventilverschlussglieds (16) kleiner ist, als die von der Dämpfungsschaltung (37) maximal aufbringbare Verzögerungswirkung M am Resonanzpunkt.

8. Ventilantrieb nach einem der vorstehenden Ansprüche, **dadurch gekennzeichnet, dass** das Federmittel (17) eine Kraft-Weg-Kennlinie mit positivem Anstieg aufweist.

9. Ventilantrieb nach einem der vorstehenden Ansprüche, **dadurch gekennzeichnet, dass** die Dämpfungsschaltung (37) eine progressiv ansteigende Verzögerungsmoment-Drehzahl-Kennlinie aufweist.

10. Ventilantrieb nach einem der vorstehenden Ansprüche, **dadurch gekennzeichnet, dass** die Dämpfungseinrichtung (37) und das Federmittel (17) derart bemessen und aufeinander abgestimmt sind, dass die Motordrehzahl (ω) beim Schließen das Fünf- bis Fünfzehnfache, vorzugsweise das Zehnfache der Drehzahl beim Öffnen des Ventils (11) ist.

11. Ventilantrieb nach einem der vorstehenden Ansprüche, **dadurch gekennzeichnet, dass** das Getriebe (19) eine Getriebelose aufweist, wodurch ein Nachlauf ermöglicht wird, während dem die nach dem Ablegen des Ventilschlussglieds im Antrieb verbleibende kinetische Energie abgebaut werden kann.

12. Ventilantrieb nach einem der vorstehenden Ansprüche, **dadurch gekennzeichnet, dass** das Getriebe zum Bewegen des Ventilverschlussglieds (16) in Öffnungsrichtung ein biegeschlaffes Zugmittel aufweist.

13. Verfahren zum Betrieb eines Ventilantriebs nach Anspruch 1, bei dem:

   der Schrittmotor (18) zum Öffnen des Ventils (11) über die Umschalteinrichtung (31) mit Strom beaufschlagt wird,
   der Schrittmotor (31) zum Halten des Ventils (11) über die Umschalteinrichtung (31) mit Haltestrom beaufschlagt wird,
   der Schrittmotor (18) zum Schließen des Ventils (11) über die Umschalteinrichtung (31) mit Strom beaufschlagt wird und
   der Schrittmotor (18) beim Schnellschluss des Ventils (11) über die Umschalteinrichtung (31) mit der Dämpfungsschaltung (37) verbunden und im Generatorbetrieb betrieben wird und
   die Umschalteinrichtung (31) vorzugsweise so gesteuert wird, dass die Wicklung (26) im Umschaltmoment stromlos ist.

14. Verfahren nach Anspruch 13, **dadurch gekennzeichnet, dass** der Schrittmotor (18) beim Schnellschluss an der Dämpfungsschaltung (37) mit einer solchen Drehzahl betrieben wird, dass die im Generatorbetrieb erzeugte Spannung eine Frequenz (ω) aufweist, die geringer ist, als die Resonanzfrequenz einer aus der Wicklung (26) und der Dämpfungsschaltung (37) bestehenden Resonanzanordnung (LCR).

**Claims**

1. Valve actuating drive (10), in particular for valves (11) or flaps with self-closing function, wherein the valve actuating drive comprises:

   a permanently excited stepper motor (18) which has at least two windings (25, 26) with an inductance (L) and an Ohmic resistance (R),
   a gear mechanism (19) via which the stepper motor (18) can be connected for drive purposes to a valve closing member (16) in order to move this in an opening direction away from a valve seat (15) and in a closing direction onto a valve seat (15),
   a spring means (17) which is connected to the valve closing member (16) in order to preload this in the closing direction,
   a feed circuitry (28) which is connected to one of the windings (25, 26) in order to energize this for driving the stepper motor (18),
   at least one damping circuitry (37) with capacitive damping circuit (38), and
   at least one switching device (31) which is connected to one of the windings (25, 26) and via which the winding (26) can be connected optionally to the feed circuitry (28) or the damping circuitry (37),
   wherein the damping circuitry (37) is a capacitive damping circuit (37) which contains a condenser (38) with a capacitance (C), wherein the capacitive damping circuit (37) is connected in parallel with the winding (26),
   so that a resonance arrangement having a resonant frequency is formed (LCR) from the inductance (L) of the winding (36), the capacitance (C) of the condenser (38) and
   the internal resistance (R) of the winding (26), and
   that the resonance arrangement is configured to work in sub-resonant mode during damping.

2. Valve actuating drive according to claim 1, **characterised in that** a further damping circuitry (37a) with capacitive damping circuit and a further switching device are provided, wherein the further switching device is connected to the other of the windings (25, 26) in order to connect the other winding (25) optionally to the feed circuitry (28a) or the damping circuitry (37a).

3. Valve actuating drive according to claim 2, **characterised in that** the switching device (31) and the further switching device are controlled to switch in synchrony.

4. Valve actuating drive according to any of the preceding claims, **characterised in that** the switching device (31) is a switching relay with mechanical contact.

5. Valve actuating drive according to claim 1, **characterised in that** the resonance circuit (LCR) has a quality factor (Q) which is greater than five, preferably greater than ten, and further preferably greater than twenty.

6. Valve actuating drive according to any of the preceding claims, **characterised in that** the spring means (17) has a spring characteristic curve according to which, at each point of the travel (x) of the valve closing member (16), the force (F) applied by the spring means (17) is greater than the total of inhibiting forces of the valve actuating drive (10).

7. Valve actuating drive according to any of the preceding claims, **characterised in that** the spring means (17) has a spring characteristic curve according to which, at each point of the travel (x) of the valve closing member (16), the force (F) applied by the spring means (17) is smaller than the maximum deceleration effect M applicable by the damping circuitry (37) at the resonance point.

8. Valve actuating drive according to any of the preceding claims, **characterised in that** the spring means (17) has a force-travel curve with positive gradient.

9. Valve actuating drive according to any of the preceding claims, **characterised in that** the damping circuitry (37) has a progressively rising deceleration moment-rotation speed curve.

10. Valve actuating drive according to any of the preceding claims, **characterised in that** the damping device (37) and the spring means (17) are dimensioned and matched to one another such that the engine rotation speed (ω) on closing is five to fifteen times, preferably ten times the rotation speed on opening of the valve (11).

11. Valve actuating drive according to any of the preceding claims, **characterised in that** the gear mechanism (19) has a gear set allowing overrun, during which the kinetic energy remaining in the drive after depositing of the valve closing member can be dissipated.

12. Valve actuating drive according to any of the preceding claims, **characterised in that** the gear mechanism has a flexible traction means for moving the valve closing member (16) in the opening direction.

13. Method for operating a valve actuating drive according to claim 1, in which:

for opening the valve (11), the stepper motor (18) is loaded with current by the switching device (31),
for holding the valve (11), the stepper motor (18) is loaded with holding current by the switching device (31),
for closing the valve (11), the stepper motor (18) is loaded with current via the switching device (31), and
for fast closure of the valve (11), the stepper motor (18) is connected to the damping circuitry (37) via the switching device (31) and operated in generator mode, and
the switching device (31) is preferably controlled such that the winding (26) is currentless at the switching moment.

14. Method according to claim 13, **characterised in that** on fast closure, the stepper motor (18) at the damping circuitry (37) is operated with a rotation speed such that the voltage generated in generator mode has a frequency (ω) which is lower than the resonant frequency of a resonance arrangement (LCR) consisting of the winding (26) and the damping circuitry (37).

## Revendications

1. Actionneur de soupape (10), destiné en particulier à des soupapes (11) ou des clapets dotés d'une fonction de fermeture automatique, l'actionneur de soupape présentant :

un moteur pas à pas (18) à excitation permanente, qui présente au moins deux enroulements (25, 26) ayant une inductance (L) et une résistance ohmique (R),
une transmission (19), par l'intermédiaire de laquelle le moteur pas à pas (18) peut être relié du point de l'entraînement à un élément obturateur de soupape (16) afin de déplacer celui-ci dans un sens d'ouverture, en l'éloignant d'un siège de soupape (15), et dans un sens de fermeture, en direction d'un siège de soupape (15),
un moyen formant ressort (17) qui est relié à l'élément obturateur de soupape (16) afin de le mettre sous précontrainte dans le sens de la fermeture,
un circuit d'alimentation (28) qui est relié à l'un des enroulements (25, 26) afin d'alimenter celui-ci en courant, en vue de l'entraînement du moteur pas à pas (18),
au moins un circuit d'amortissement (37) comprenant un circuit d'amortissement électrique (38) capacitif, et au moins un dispositif de commutation (31) qui est relié à l'un des enroulements (25, 26) et par l'intermédiaire duquel l'enroulement (26) peut être relié au choix au circuit d'alimentation (28) ou au circuit d'amortissement (37),
le circuit d'amortissement (37) étant un circuit d'amortissement électrique (37) capacitif qui comprend un condensateur (38) avec une capacité (C), le circuit d'amortissement électrique (37) capacitif étant monté en parallèle à l'enroulement (26),
de manière à former un système résonant (LCR) qui est constitué de l'inductance (L) de l'enroulement (26), de la capacité (C) du condensateur (38) et de la résistance interne (R) de l'enroulement (26), et qui présente une fréquence de résonance, et
de manière à ce que le système résonant soit agencé pour fonctionner en service de sous-résonance pendant l'amortissement.

2. Actionneur de soupape selon la revendication 1, **caractérisé en ce qu'**il est prévu un circuit d'amortissement (37a) supplémentaire, comprenant un circuit d'amortissement capacitif, et un dispositif de commutation supplémentaire, le dispositif de commutation supplémentaire étant relié à l'autre des enroulements (25, 26) afin de relier l'autre enroulement (25) au choix au circuit d'alimentation (28a) ou au circuit d'amortissement (37a).

3. Actionneur de soupape selon la revendication 2, **caractérisé en ce que** le dispositif de commutation (31) et le dispositif de commutation supplémentaire sont commandés en vue d'une commutation synchrone.

**4.** Actionneur de soupape selon l'une des revendications précédentes, **caractérisé en ce que** le dispositif de commutation (31) est un circuit de commutation à contact mécanique.

**5.** Actionneur de soupape selon la revendication 1, **caractérisé en ce que** le circuit résonant (LCR) présente un facteur de qualité (Q) qui est supérieur à cinq, de préférence supérieur à dix, et de manière particulièrement avantageuse supérieur à vingt.

**6.** Actionneur de soupape selon l'une des revendications précédentes, **caractérisé en ce que** le moyen formant ressort (17) présente une courbe caractéristique de ressort selon laquelle la force (F) produite par le moyen formant ressort (17), à chaque point de la course (x) de l'élément obturateur de soupape (16), est supérieure à la somme des forces de résistance de l'actionneur de soupape (10).

**7.** Actionneur de soupape selon l'une des revendications précédentes, **caractérisé en ce que** le moyen formant ressort (17) présente une courbe caractéristique de ressort selon laquelle la force (F) produite par le moyen formant ressort (17), à chaque point de la course (x) de l'élément obturateur de soupape (16), est inférieure à l'action de décélération M maximale susceptible d'être produite par le circuit d'amortissement (37) au point de résonance.

**8.** Actionneur de soupape selon l'une des revendications précédentes, **caractérisé en ce que** le moyen formant ressort (17) présente une caractéristique force/course à montée positive.

**9.** Actionneur de soupape selon l'une des revendications précédentes, **caractérisé en ce que** le circuit d'amortissement (37) présente une caractéristique moment de décélération/vitesse de rotation à montée progressive.

**10.** Actionneur de soupape selon l'une des revendications précédentes, **caractérisé en ce que** le dispositif d'amortissement (37) et le moyen formant ressort (17) sont dimensionnés et accordés l'un à l'autre de manière à ce que la vitesse de rotation du moteur ($\omega$), lors de la fermeture, corresponde à cinq à quinze fois, de préférence à dix fois, la vitesse de rotation lors de l'ouverture de la soupape (11).

**11.** Actionneur de soupape selon l'une des revendications précédentes, **caractérisé en ce que** la transmission (19) présente un système sans engrenage, ce qui autorise une marche par inertie au cours de laquelle l'énergie cinétique subsistant dans l'actionneur après la séparation de l'élément obturateur de soupape peut être absorbée.

**12.** Actionneur de soupape selon l'une des revendications précédentes, **caractérisé en ce que** la transmission présente un moyen de traction souple en flexion pour le déplacement de l'élément obturateur de soupape (16) dans le sens de l'ouverture.

**13.** Procédé pour faire fonctionner un actionneur de soupape selon la revendication 1, selon lequel

le moteur pas à pas (18) est alimenté en courant par l'intermédiaire du dispositif de commutation (31) pour ouvrir la soupape (11),
le moteur pas à pas (31) est alimenté avec un courant de maintien par l'intermédiaire du dispositif de commutation (31) pour maintenir la soupape (11),
le moteur pas à pas (18) est alimenté en courant par l'intermédiaire du dispositif de commutation (31) pour fermer la soupape (11),
le moteur pas à pas (18), lors de la fermeture rapide de la soupape (11), est relié au circuit d'amortissement (37) par l'intermédiaire du dispositif de commutation (31) et fonctionne en service générateur, et
le dispositif de commutation (31) est commandé de préférence de manière à ce que l'enroulement (26) soit sans courant au moment de la commutation.

**14.** Procédé selon la revendication 13, **caractérisé en ce que**, lors de la fermeture rapide, le moteur pas à pas (18) fonctionne sur le circuit d'amortissement (37) avec une vitesse de rotation telle que la tension produite en service générateur présente une fréquence ($\omega$) qui est inférieure à la fréquence de résonance d'un système de résonance (LCR) composé de l'enroulement (26) et du circuit d'amortissement (37).

Fig.1

Fig.2

Fig.3

Fig.4

Fig.5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10248616 A1
- EP 2228573 B1
- DE 3531262 A1
- DE 102011103135 A1
- US 6100655 A
- US 6040676 A